Europäisches Patentamt

European Patent Office

Office européen des brevets

(11) Publication number: **0 333 149**
**A2**

# EUROPEAN PATENT APPLICATION

(21) Application number: 89104555.1

(22) Date of filing: **15.03.89**

(51) Int. Cl.⁴: **C04B 37/00 , C04B 37/02**

(30) Priority: **17.03.88 JP 61916/88**
**12.10.88 JP 254730/88**

(43) Date of publication of application:
**20.09.89 Bulletin 89/38**

(84) Designated Contracting States:
**DE FR GB**

(71) Applicant: **HITACHI, LTD.**
**6, Kanda Surugadai 4-chome**
**Chiyoda-ku Tokyo 101(JP)**

(72) Inventor: **Okamura, Hisanori**
**Midorigaoka Danchi 774-53 Tokaimura**
**Naka-gun Ibaraki-ken(JP)**
Inventor: **Sakamoto, Masahiko**
**5-16, Namekawahoncho-5-chome**
**Hitachi-shi(JP)**
Inventor: **Akiyama, Hirosi**
**15-3, Ishinazakacho-1-chome**
**Hitachi-shi(JP)**
Inventor: **Kamoshita, Mutuo**
**3196, Higashiishikawa**
**Katsuta-shi(JP)**
Inventor: **Funamoto, Takao**
**10-35, Ayukawacho-6-chome**
**Hitachi-shi(JP)**

(74) Representative: **Patentanwälte Beetz sen. -**
**Beetz jun. Timpe - Siegfried -**
**Schmitt-Fumian- Mayr**
**Steinsdorfstrasse 10**
**D-8000 München 22(DE)**

(54) Ceramic composite and method of preparation thereof.

(57) A ceramic composite in which a barrier layer of at least one metal selected from those of Groups Va and Vla of the periodic table is provided on the surface of a carbide, nitride, oxide or boride ceramic member (2), and a soldering material (4) containing 0.5-70% by weight of at least one element selected from those of Group IVa of the periodic table or a soldering material (4) comprising Ni as the principal component is metallized or joined thereonto is obtained by forming the barrier on the surface of the ceramic member (2) by means of vapor deposition, sputtering, chemical vapor deposition, chemical plating or like methods and forming a soldering material layer (4) on the barrier layer by heating it at a temperature not below the melting point of the soldering material (4).

FIG. I

## CERAMIC COMPOSITE AND METHOD OF PREPARATION THEREOF

### BACKGROUND OF THE INVENTION

### FIELD OF THE INVENTION

The present invention relates to a composite article in which a ceramic member such as a carbide, nitride, oxide or boride is joined with another member, a ceramic composite used for said joining, and a method of preparation of said ceramic composite.

### DESCRIPTION OF RELATED ART

A great number of processes have hitherto been developed for joining a ceramic member with another ceramic member, or a ceramic member with a metal member, thereby to obtain a composite article. Particularly among these, the so-called active metal method based on the process disclosed in U.S. Patent No. 2,739,375 has come to be in wide use. The active metal method has the advantage of making it possible to join a ceramic member with a metal member at one time of heating by use of an active brazing metal comprising Ni, Cu, Ag or Cu-Ag alloy which has been incorporated with several per cent of Ti or Zr. Accordingly, the method is widely studied as a means for joining a ceramic member of, for example, alumina ($Al_2O_3$), silicon nitride ($Si_3N_4$), zirconia ($ZrO_2$) and aluminum nitride (AlN), with a metal member.

The mechanism of joining by said method is as follows. The active metal (Ti) in the soldering material is preferentially adsorbed onto the interface of the ceramic during the course of heating, which then reacts with the ceramic to effect joining. In the case of silicon nitride, such compounds as Ti-N, Ti-Si, and Si-Cu are formed at the joining interface. In the case of zirconia, the oxygen of zirconia reacts with Ti to form an oxide at the interface. In the case of alumina, $SiO_2$ present in alumina reacts with Ti to form a reaction product such as Ti-O and thus to effect joining.

However, the above method has a disadvantage in that it can be difficultly applied to silicon carbide (SiC) ceramic and, in particular, is utterly unusable for silicon carbide ceramic prepared by hot pressing.

Accordingly, a number of methods have been proposed as a means for metallizing and joining silicon carbide (SiC) ceramic. Japanese Patent Application Kokai (Laid-open) No. 59-139417 (1984) discloses a method which comprises providing an insert material of an Al-Si alloy between said ceramic and a metal and applying heat and pressure to effect diffusion joining. Japanese Patent Application Kokai (Laid-open) No. 62-70284 (1987) discloses a method which comprises preliminarily printing chromium (Cr) powder on the surface of said ceramic, then heating it in a non-oxidizing atmosphere to form a reaction layer of said Cr powder with said ceramic member, then applying a Ni or Cu plating to the surface of said reaction layer, and succeedingly joining the resulting product to a metal or other materials by silver-alloy brazing or soldering.

However, the method disclosed in said Japanese Patent Application Kokai (Laid-open) No. 59-217682 requires application of pressure at the time of joining and is hence disadvantageous in joining members of complicated shape. Further, the soldering material, which is an Al-Si alloy, has a low melting point of 610°C and hence the thermal resistance of the joint is poor, which is another disadvantage of the method.

The method disclosed in said Japanese Patent Application Kokai (Laid-open) No. 62-70284 requires application of Ni or Cu plating after the formation of the reaction layer of said ceramic with Cr powder and before silver-alloy brazing, which leads to disadvantages of causing contamination of silicon carbide by a plating liquor as well as requiring extra manpower. Generally, the plating liquor contains nickel sulfate or nickel chloride.

In the case of electroless plating, insulation resistance on ceramics is lowered, and in the case of electroplating, electrodes are required, which disadvantageously causes extra manpower.

Another method for joining a silicon carbide ceramic member with a metal member comprises, as disclosed in Japanese Patent Application Kokai (Laid-open) No. 60-151292 (1985), inserting between the ceramic member and the metal member a Cr-Ni alloy foil capable of easily reacting therewith and joining them through the medium of the foil.

The above joining can be effected by merely placing said insert material between the ceramic member and the metal member to be joined and heating it at a temperature not below the melting point of the insert material. However, since the reaction product layer formed at the interface of the ceramic member is generally brittle, its strength is lowered when said layer is formed thick. Accordingly, the joining and the formation of soldering material layer should be conducted at a temperature just above the melting point of the soldering material and for a short time.

A composite article comprising a ceramic member and a metal member is required to have a satisfactory strength at high temperatures to be used extensively. When such a composite article is maintained at a temperature of 600°C or higher, the reaction between the ceramic and the soldering material is promoted, resulting in further increase in the reaction layer thickness and decrease in strength. Thus, such composite articles had a problem in the thermal resistance of the joint.

On the other hand, as a means for metallizing silicon nitride or joining a silicon nitride member with a metal member, there has been proposed, as disclosed in Japanese Patent Application Kokai (Laid-open) Nos. 61-209977 (1986), 61-209978 (1986) and 61-209980 (1986), a method which comprises placing an insert material comprising mainly Ni-Co-Fe or Ni-Co-Pt alloy between the ceramic member and the metal member to be joined and heating it at a temperature not below the melting point of the insert material to effect joining. However, silicon nitride very readily reacts with Ni contained in the insert material even at a temperature in the neighborhood of 800°C. This results in the formation of a very brittle Ni-Si compound layer and in the decrease of the strength of joint. Thus, the thermal resistance of the joint is a problem.

Thus, silicon carbide and silicon nitride ceramic have had a problem in that when they come into direct contact with a metal containing Ti, Ni, Fe, etc. they react at a relatively low temperature in the neighborhood of 700°C, forming a brittle layer.

As described above, no due consideration has been given in the composite article of the prior art to the thermal resistance of the joint and to the use of soldering materials comprising Ni as the principal component, and such articles have had problems in practical use. Accordingly, a ceramic composite excellent in thermal resistance has been eagerly desired.

SUMMARY OF THE INVENTION

An object of the present invention is to provide a ceramic composite which can give a joint of an excellent thermal resistance and high reliability.

Another object of the present invention is to provide a ceramic composite which can give a highly reliable joint of silicon carbide.

A further object of the present invention is to provide a method of preparation of said ceramic composite.

A still further object of the present invention is to provide a composite article in which the ceramic composite obtained as described above is joined with another ceramic member or metal member.

The ceramic composite of the present invention is characterized in that a barrier layer of at least one metal selected from those of Groups Va and Vla of the periodic table is formed on the surface of ceramic beforehand, and then a soldering material containing 0.5-70% by weight, preferably 0.5-30% by weight, more preferably 0.5-20% by weight, of at least one element selected from those of Group IVa of the periodic table, or a soldering material comprising Ni as the principal component, is joined thereonto.

The silicon carbide ceramic composite of the present invention is characterized in that there are joined, respectively, a Cr-containing barrier layer onto the surface of a silicon carbide ceramic and then a soldering material layer containing 0.5-70% by weight, preferably 0.5-30% by weight, more preferably 0.5-20% by weight, of at least one element selected from those of Group IVa of the periodic table thereonto.

According to the present invention, there is provided a method of preparation of the above-mentioned ceramic composite which comprises forming a barrier layer of at least one metal selected from those of Groups Va and Vla of the periodic table on the surface of ceramic, providing on said layer a soldering material containing 0.5-70% by weight, preferably 0.5-30% by weight, more preferably 0.5-20% by weight, of at least one element selected from those of Group IVa of the periodic table or a soldering material comprising Ni as the principal component, and heating it at a temperature not lower than the melting point of the soldering material to form a soldering material layer.

Further, according to the present invention, there is provided a method of preparation of the above-mentioned silicon carbide ceramic composite which comprises forming a Cr-containing barrier layer on the surface of silicon carbide ceramic, providing on said layer a soldering material containing 0.5-70% by weight, preferably 0.5-30% by weight, more preferably 0.5-20% by weight, of at least one element selected from those of Group IVa of the periodic table, and heating it at a temperature not lower than the melting point of said soldering material to form a soldering material layer.

BRIEF DESCRIPTION OF THE DRAWING

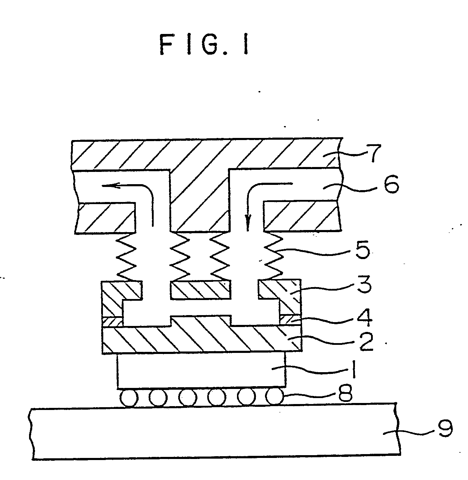

Fig. 1 shows a diagrammatical cross-sectional view of a cooling structure using a ceramic composite article according to one embodiment of the present invention.

DETAILED DESCRIPTION OF THE PREFERRED

## EMBODIMENTS

The above-mentioned objects can be attained by forming, on the intended surface of a ceramic member, a layer of at least one metal selected from those of Groups Va and Vla of the periodic table and then a soldering material layer formed of a soldering material which comprises a metal, or an alloy comprising as the principal component two or more thereof, selected from the group consisting of Cu, Ag, Ni, Pd, Al, Si and Mn and contains as an active metal 0.5-70% by weight, preferably 0.5-30% by weight, more preferably 0.5-20% by weight, of at least one element selected from those of Group IVa of the periodic table, namely Ti, Zr, and Hf (said soldering material is hereinafter referred to as active brazing metal) or of a soldering material which comprises Ni as the principal component.

Thus, the present invention is characterized in that before forming a soldering material layer of an active brazing metal or a soldering material comprising Ni as the principal component, a layer of at least one metal selected from those of Groups Va and Vla of the periodic table is formed in advance on the joining surface of a ceramic member.

The layer of at least one metal selected from those of Groups Va and Vla of the periodic table formed in advance on the surface of the ceramic member suppresses an excessive reaction of the ceramic member with the element present in the active brazing metal and the element present in the soldering material comprising Ni as principal component and further containing Cr; in other words, it functions as a barrier layer. Consequently, a composite article with a high reliability of a ceramic member and another ceramic member or of a ceramic member and a metal member can be obtained.

Furthermore, since the barrier layer suppresses an excessive reaction between the ceramic member and Zr, Ti, Ni, Mn and Fe, which are liable to react therewith, it makes it possible to use a high-temperature soldering material containing the above-mentioned elements. Thus, the above-mentioned ceramic composite article with an excellent thermal resistance and high strength can be obtained.

Thus, the present invention is basically characterized in that a barrier layer is formed to prevent an excessive reaction from occurring when a ceramic member is allowed to contact a soldering material layer through an active brazing metal or a soldering material comprising Ni as principal component and further containing Cr.

The present invention will be further described in detail below.

The formation of the metal barrier layer on the surface of the ceramic member may be attained by physical methods such as vapor deposition, sputtering and chemical vapor deposition or chemical methods. Preferred barrier layer forming metals are Cr, Mo, W, Nb and V.

The barrier layer formed by the above-mentioned method preferably has a thickness of 0.1-10 $\mu$m. When the thickness is less than 0.1 $\mu$m, the layer is ineffective as a barrier layer to suppress the excessive reaction with other metals. When it exceeds 10 $\mu$m, fracture of the ceramic or peeling of the metal barrier layer occurs owing to the thermal stress developed between the ceramic member and the barrier layer.

The barrier layer formed by the above-mentioned method can attain its object also when a reaction with the ceramic member occurs during the course of forming the layer of an active brazing metal or a soldering material comprising Ni as principal component and further containing Cr.

The soldering material to be provided on the metal barrier layer formed beforehand on the surface of the ceramic member by the above-mentioned method may be applied in any of the forms of alloy powder, alloy foil, and powder mixture, of the active brazing metal. The soldering material comprising Ni as principal component and containing Cr may also be applied in the same manner as above.

Preferred examples of the active brazing metal include those of Cu-Ti, Ni-Ti, Ag-Cu-Ti, Ag-Pd-Ti, Mn-Cu-Ti, Al-Si-Ti and Ag-Cu-In-Ti. Particularly preferred among these is a combination of 72% by weight of Ag, 25% by weight of Cu, and 3% by weight of Ti.

Although the amount of the active metal to be added varies depending on the combination of metals, it is preferably 0.5-70% by weight. A content below 0.5% by weight is insufficient, whereas a content exceeding 70% by weight causes embrittlement of the soldering material.

The soldering materials comprising Ni as principal component are preferably those of Ni-Cr-B, Ni-Cr-Pd, Ni-Cr-Si, Ni-Co-Fe and Ni-Cr-Si-Pd which have a melting point of 1,300 $^\circ$C or lower.

In the case of silicon carbide, heretofore, particularly the preparation of composite articles thereof has been considered to be difficult. However, the use of a Cr-containing layer particularly as a barrier layer in the ceramic composite of the present invention as described above has enabled the preparation of such composite articles. Details of the preparation will be described below.

It can be attained by forming, on the intended surface of a silicon carbide member, a Cr-containing layer beforehand and then a layer of a soldering material which comprises a metal, or an alloy comprising as the principal component two or more thereof, selected, for example, from the group consisting of Cu, Ag, Ni, Pd, Al, Si and Mn and contains as an active metal 0.5-70% by weight, preferably 0.5-30% by weight, more preferably 0.5-20% by weight, of at least one element selected from those of Group IVa of the periodic table, namely Ti, Zr and Hf (said soldering material is hereinafter referred to as active brazing metal).

Thus, the present invention is characterized by forming a Cr-containing layer in advance on the joining surface of said ceramic before metallizing it with said active brazing metal.

The Cr-containing layer formed on the surface of said ceramic suppresses an excessive reaction of said ceramic with the elements (e.g. Cu) other than those of Group IVa of the periodic table contained in said active brazing metal, in other words, it functions as a barrier layer. Consequently, a high joining strength can be obtained.

Investigation of the cause of difficulty in joining a silicon carbide ceramic through said active brazing metal conducted by the present inventors has showed that it is presumably due to the formation of brittle silicide in the joining surface resulting from excessive reaction occurring, in the case of silicon carbide ceramic, between said ceramic and Cu, Ni, Mn, Ti, etc. present in said brazing metal.

Thus, the present invention is basically characterized by forming a Cr-containing layer on the joining surface before forming the layer of said active brazing metal.

The present invention will be described in detail below.

The formation of the Cr-containing layer on the surface of silicon carbide ceramic mentioned above may be attained by physical methods, such as vapor deposition, sputtering and chemical vapor deposition, and chemical methods. Further, the Cr-containing layer may also be formed, as disclosed in Japanese Patent Application Kokai (Laid-open) No. 62-70284 (1987), by printing or coating Cr powder in the form of paste on the surface of said ceramic and then heating it in a non-oxidizing atmosphere, for example in Ar gas or in vacuo, at 800-1200°C. Further, the Cr-containing layer can be formed by placing said ceramic in the Cr powder and heating the whole in Ar gas or in vacuo at 800-1200°C.

The Cr-containing layer formed by the above-mentioned method preferably has a thickness of 0.5-10 μm. When the thickness is less than 0.5 μm, the layer is ineffective as a barrier layer to suppress the excessive reaction with other metals, whereas when it exceeds 10 μm cracks tend to develop in the silicon carbide ceramic owing to the thermal stress developed between the silicon carbide ceramic and the Cr-containing layer, which is undesirable.

The Cr-containing layer formed by the above-mentioned method is preferably in the form of a mixed layer of chromium carbide and chromium silicide as the result of its reaction with silicon carbide. The present object can be attained also when the reaction between silicon carbide and the Cr-containing layer takes place during the course of forming the layer of active brazing metal mentioned above.

The brazing metal to be provided on the surface of the Cr-containing layer formed beforehand on the surface of silicon carbide ceramic by the above-mentioned method may be applied in any of the forms of alloy powder, alloy foil, and powder mixture, of the active brazing metal.

Preferred example of the active brazing metal include those of Cu-Ti, Ni-Ti, Ag-Cu-Ti, Ag-Pd-Ti, Mn-Cu-Ti, Al-Si-Ti and Ag-Cu-In-Ti. Particularly preferred among these is a combination of 72% by weight of Ag, 25% by weight of Cu and 3% by weight of Ti from the viewpoint of its low melting point.

Although the amount of said active metal to be added varies depending on the combination of metals, it is preferably 0.5-70% by weight. A content below 0.5% by weight is insufficient, whereas a content exceeding 70% by weight causes embrittlement of the brazing metal. Particularly the amount is preferably in the range of 0.5-30% by weight.

The composite article of the present invention is useful for use in heaters and semiconductor packaging.

The present invention will be illustrated below by way of Examples, but it is not limited to these Examples.

The "%" in Examples all means "% by weight".

Example 1

In joining a SiC ceramic member prepared by hot pressing using about 1-2% of BeO as a sintering aid with a stainless steel member of the same shape, a W layer of about 1 μm thickness was formed beforehand on the joining surface of the ceramic member by means of sputtering.

Between the SiC member having the W layer formed thereon and the stainless steel member, was placed an active brazing metal in the form of paste comprising an alloy powder of 75% Ag-25% Cu incorporated with 3% of Ti powder, and then heated in vacuo at 850°C for 3 minutes to effect joining. Thereafter, the resulting composite article was subjected to a four-points bending test. Resultantly, a bending strength of 294.3 N (30 kgf)/mm² was obtained even at a heating temperature of 500°C and the sample was not broken at the joint but on the part of the SiC ceramic substrate.

In all the examples, the bending strength was measured on a test piece of 5 mm thick and 10 mm wide with a four-point bending test.

Example 2

In joining a silicon carbide ceramic member prepared by pressureless sintering using B and C as the sintering aid with a molybdenum member, a Mo layer of about 2 μm in thickness was formed beforehand on the joining surface of the ceramic member by means of vapor deposition.

Then, between the ceramic member having the Mo layer formed thereon and the molybdenum member, was placed a soldering material comprising 39% of Ni, 33% of Cr and 28% of Si of 100 μm in thickness, and then heated at a temperature not below the melting point of the soldering material.

Examination of the thermal resistance of the composite article thus obtained showed that no development of a layer of brittle compounds of SiC with the soldering material was observed even at a heating temperature of 900°C.

Example 3

In joining a silicon nitride ceramic member with a metal member of "Kovar" a Nb layer of about 2 μm in thickness was formed in advance on the joining surface of the ceramic member by means of vapor deposition. A soldering material comprising Ni, Fe and Co as the principal component was put between the ceramic member having the Nb layer formed thereon and the metal member, and then heated at a temperature not below the melting point of the soldering material to effect joining.

Examination of the thermal resistance of the joined article thus obtained showed no decrease in the strength of the joint even at a heating temperature of 900°C.

Example 4

In joining a SiC ceramic member 50 mm square and 5 mm thick prepared by hot pressing using about 1% of BeO as the sintering aid with a pressureless sintering Si₃N₄ ceramic of the same shape, Cr powder in a paste form was printed in advance on the joining surface of the SiC ceramic member and heated in Ar gas at 950°C for 30 minutes, thereby to form a Cr-containing layer of about 1 μm in thickness on the surface of said ceramic member. In this case, the particle size of said Cr powder was about 10 μm, and the organic binder used was a mixture of ethyl cellulose and ethyl carbitol acetate.

An active brazing metal in the form of paste comprising an alloy powder of 75% Ag-25% Cu incorporated with 3% of Ti powder was put between the SiC ceramic member having the Cr-containing layer formed thereon and the Si₃N₄ ceramic member, and heated in vacuo at 850°C for 3 minutes to effect joining. Thereafter, the joined article was subjected to a bending test, in which a bending strength of 50 kgf/mm² was obtained and the article was not broken at the joint but on the part of the SiC substrate.

Example 5

In joining a pressureless sintering SiC ceramic member of 30 mm in diameter and 50 mm in length with a Cu member of the same shape, a Cr-containing layer of about 2 μm in thickness was formed in advance on the joining surface of the SiC ceramic member by means of chemical plating.

Then, an alloy foil of 50 μm in thickness comprising 60% of Ag, 20% of Cu, 15% of Pd and 5% of Ti was inserted between the SiC ceramic member having the Cr-containing layer formed thereon and the Cu member, and heated in Ar atmosphere at 1000°C for 5 minutes to effect joining. Thereafter, the resulting composite article was subjected to a bending test, in which a bending strength of 294.3 N (30 kgf)/mm² was obtained and the article was broken on the part of the SiC substrate. A silver plate of 2 mm in thickness was used herein as the thermal stress relaxation material.

Example 6

In joining a SiC ceramic member of 50 mm in outside diameter and 40 mm inside diameter prepared by hot pressing with a Kovar member of the same shape, a Cr-containing layer of about 1 μm in thickness was formed beforehand on the joining surface of said ceramic member by means of vapor deposition.

Then, a soldering material in the form of paste comprising an alloy powder of 72% Ag-28% Cu incorporated with 5% of Zr was printed in a thickness of 100 μm on the surface of the SiC ceramic member having the Cr-containing layer formed thereon and heated under vacuum of 6.5 (5) x 10⁻⁵ h Pa (Torr) at 850°C for 5 minutes, whereby the surface of the ceramic member was metallized.

The ceramic member metallized as described above was joined with the Kovar member by use of a 60% Sn-40% Pb solder to obtain a composite article of a high reliability.

Example 7

A Cr-containing layer 1.5 μm thick was formed beforehand by means of vapor deposition on the surface of a silicon carbide ceramic member prepared by hot pressing using 1-2% of BeO as the sintering aid. Thereafter, the ceramic member was joined with an alumina ceramic member by use of a soldering material comprising an alloy of 72% Ag and 28% Cu incorporated with about 3% of Ti. The composite article obtained had a strength of joint of 294.3 N (30 kgf)/mm² and was broken on the part of the alumina ceramic member.

Example 8

This example shows application of the present invention to a cooling structure for an LSI element for computer. This cooling structure dissipates heat through SiC ceramics 2 having a high thermal conductivity of 270 W/m·k and an electric insulation of higher than $10^{13}$ Ωcm from LSI element 1, as shown in Fig. 1.

In the cooling structure as shown in Fig. 1, the SiC ceramics 2 is required to bond to Kovar-made cap 3.

In this example, the present invention was applied to the bonding of said SiC ceramics to the cap 3.

In allowing the SiC ceramics 2 to bond to the cap 3, a Cr-containing layer of about 1.5 μm thick was beforehand formed on the SiC ceramics. This Cr-containing layer was formed by printing a Cr powder paste in a thickness of about 500 μm onto the surface of the SiC ceramics to bond to the cap and heat treated in an Ar atmosphere at 950°C for 30 minutes. After cooling, the reaction layer of the Cr powder paste and SiC ceramics alone was retained and the remainder of unreacted Cr powder paste was brushed away.

The SiC ceramics 2 having the Cr-containing layer of about 1.5 μm thick formed thereon was allowed to bond to the cap 3 through a soldering material 4 comprising a 72 wt% Ag-Cu alloy incorporated with 2 wt% of Ti added thereto. Thus, a sound joining portion could be obtained.

This bonding with the soldering material 4 was carried out in a non-oxidizing atmosphere under a pressure reduced down to 6.6 x 10⁻⁵ Pa.

The Kovar-made cap 3 having the SiC ceramics 2 bonded thereto was joined with cooling jacket 7 for protecting cooling water 6 via bellows 5, thus obtaining the cooling structure.

The LSI element 1 was allowed to bond to ceramic substrate 9 having a multiwiring formed thereon via solder 8.

This cooling structure was applied to a large computer with a high cooling efficiency.

## Claims

1. A ceramic composite in which a barrier layer of at least one metal selected from those of Groups Va and VIa of the periodic table is provided on the surface of a ceramic member (2), and a soldering material (4) containing 0.5-70% by weight of at least one element selected from those of Group IVa of the periodic table or a soldering material (4) comprising Ni as the principal component is provided thereon.

2. A ceramic composite according to claim 1, wherein the soldering material (4) contains 0.5-30% by weight of at least one element selected from those of Group IVa of the periodic table.

3. A ceramic composite according to claim 1, wherein the soldering material (4) contains 0.5-20% by weight of at least one element selected from those of Group IVa of the periodic table.

4. A ceramic composite according to claim 1, wherein said metal layer has a thickness of 0.1-10 μm.

5. A ceramic composite according to claim 1, wherein the remaining component of the soldering material (4) containing the element of Group IVa is a metal, or an alloy comprising as the principal component at least two thereof, selected from the group consisting of Cu, Ag, Ni, Cr, Pd, Pt, Al, Si, Co and Mn.

6. A ceramic composite article comprising the ceramic composite according to claim 1 and another member joined thereonto with or without the aid of another soldering material (4) comprising a hard solder or soft solder free of any element of Group IVa of the periodic table therebetween.

7. A silicon carbide ceramic composite, in which there are joined, respectively, a Cr-containing layer onto the surface of a silicon carbide member(2), and a soldering material layer (4) containing 0.5-70% by weight of at least one element selected from those of Group IVa of the periodic table thereonto.

8. A silicon carbide ceramic composite article which comprises the ceramic composite according to claim 7 and another member joined thereonto with or without the aid of another soldering material (4) comprising a hard solder or soft solder free of any element of Group IVa of the periodic table therebetween.

9. A silicon carbide composite according to claim 7, wherein the Cr-containing layer has a thickness of 0.5-10 μm.

10. A silicon carbide composite according to claim 7, wherein the remaining component of the soldering material (4) containing the element of Group IVa of the periodic table is a metal, or an alloy comprising as the principal component at least two thereof, selected from the group consisting of Cu, Ag, Ni, Pd, Al, Si, and Mn.

11. A heater which comprises the silicon carbide composite according to claim 8.

12. A package for a semiconductor which comprises the silicon carbide composite according to claim 8.

13. A method of preparation of a ceramic composite comprising the steps of (1) forming a barrier layer of at least one metal selected from those of Groups Va and VIa of the periodic table on the surface of a ceramic member(2) and (2) providing thereon a soldering material (4) containing 0.5-70% by weight of at least one element selected from those of Group IVa of the periodic table or a soldering material (4) comprising Ni as the principal component, and heating it at a temperature not below the melting point of the soldering material (4) to form a soldering material layer (4).

14. A method of preparation of a ceramic composite according to claim 13, wherein the soldering material (4) contains 0.5-30% by weight of at least one element selected from those of Group IVa of the periodic table.

15. A method of preparation of a ceramic composite according to claim 13, wherein the soldering material 4) contains 0.5-20% by weight of at least one element selected from those of Group IVa of the periodic table.

16. A method of preparation of a silicon carbide ceramic composite according to claim 7, comprising the steps of (1) forming a Cr-containing layer on the surface of a silicon carbide ceramic member (2), and (2) providing thereon a soldering material (4) containing 0.5-70% by weight of at least one element selected from those of Group IVa of the periodic table, and heating it at a temperature not below the melting point of the soldering material (4) to form a soldering material layer (4).

17. A method of preparation of a silicon carbide composite according to claim 16, wherein the soldering material (4) contains 0.5-30% by weight of at least one element selected from those of Group IVa of the periodic table.

18. A method of preparation of a silicon carbide composite according to claim 16, wherein the soldering material 4) contains 0.5-20% by weight of at least one element selected from those of Group IVa of the periodic table.

19. A method of preparation according to claim 13, wherein the barrier layer of metal is formed by means of vapor deposition, sputtering, chemical vapor deposition or chemical plating.

20. A method of preparation according to claim 13, wherein the barrier layer of metal is formed by printing or coating a Cr powder in the form of paste and then heating it in a non-oxidizing atmosphere or in vacuo at 800-1200°C.

# F I G. 1